# EUROPEAN PATENT SPECIFICATION

(11) **EP 2 340 364 B1**
(45) Date of publication and mention of the grant of the patent: **21.10.2015**
(21) Application number: 09818297.5
(22) Date of filing: 25.09.2009
(51) Int. Cl.: F01N 13/14, F01N 13/10, F01N 3/04, F02B 39/00, F01D 25/14, F02C 6/12

(54) **EXHAUST FLOW INSULATOR FOR AN EXHAUST SYSTEM DEVICE**
ABGASSTRÖMUNGSISOLATOR FÜR EINE ABGASVORRICHTUNG
ISOLATEUR D'ÉCOULEMENT D'ÉCHAPPEMENT POUR DISPOSITIF DE SYSTÈME D'ÉCHAPPEMENT

(30) Priority: 01.10.2008 US 101812 P
(43) Date of publication of application: 06.07.2011
(73) Proprietor: Borgwarner Inc., Auburn Hills, MI 48326 (US)
(72) Inventor: JOERGL, Volker, A-2384 Breitenfurt (AT); KIENER, Timm, Lake Orion Michigan 48362 (US)
(74) Representative: Hoefer & Partner Patentanwälte mbB
(86) International application number: PCT/US2009/058301
(87) International publication number: WO 2010/039590

(56) References cited:
- EP-A1- 0 653 552
- EP-A2- 0 340 946
- EP-A2- 0 340 946
- DE-B3- 10 336 978
- DE-C1- 4 206 248
- JP-A- 10 008 952
- JP-A- 2000 110 557
- JP-A- 2004 183 651
- US-A- 2 823 890
- US-A- 5 311 738
- US-A- 5 463 867
- US-A1- 2004 177 609
- US-B1- 6 397 589

## Description

This application claims the benefit of United States Provisional Application No. 61/101,812 filed October 1, 2008.

### TECHNICAL FIELD

The invention relates to an exhaust system device according to the preamble portion of Claim 1. Such a device is known from US 6,397,589 B1, US 5,311,738 A, DE 4206248 C1 and US 5 463 867 A respectively. Another exhaust system device is known from US 2004/0177 609 A1.

### BACKGROUND

Combustion engines use breathing systems including induction systems to carry induction gases to engine combustion chambers, and exhaust systems to convey exhaust gases away from the combustion chambers. An exhaust system may include various devices, which may include an exhaust manifold that may collect exhaust gases from a plurality of different combustion chambers, and a turbocharger that includes a turbine housing in downstream fluid communication with the exhaust manifold. Other exhaust system devices may include, for example, exhaust pipes or conduit between turbine housings and one or more valves regulating exhaust flow between turbine housings.

### SUMMARY OF EXEMPLARY EMBODIMENTS

According to Claim 1, an exhaust system device is defined including a liquid-cooled non-ferrous housing including an inlet, an outlet, a path for exhaust gas between the inlet and the outlet, and a liquid cooling passage adjacent the exhaust gas path. An exhaust flow insulator is carried in the exhaust gas path of the housing substantially from the inlet and substantially to the outlet and for conveying exhaust gas through the housing to limit heat transfer from exhaust gas to the housing. The insulator is composed of at least one of a ferrous material or a ceramic material. Further, an insulating void is provided between the housing and the insulator.

Other exemplary embodiments will become apparent from the detailed description provided hereinafter. It should be understood that the detailed description and specific examples, while disclosing exemplary embodiments of the invention, are intended for purposes of illustration only and are not intended to limit the scope of the invention.

### BRIEF DESCRIPTION OF THE DRAWINGS

Exemplary embodiments will become more fully understood from the detailed description and the accompanying drawings, wherein:
FIG. 1 is a perspective view of an exemplary embodiment of a portion of an engine having an exhaust system including an exhaust manifold and a turbocharger turbine housing;
FIG. 2 is a fragmented schematic view of the exhaust manifold and engine of FIG. 1;
FIG. 2A is a sectional end view of the exhaust manifold of FIG. 2;
FIG. 3 is a fragmented schematic view of a second exemplary embodiment of an exhaust manifold and engine;
FIG. 4 is a fragmented end view of the exhaust manifold and engine of FIG. 3;
FIG. 5 is a fragmented schematic view of a third exemplary embodiment of an exhaust manifold and engine;
FIG. 6 is a fragmented schematic view of a fourth exemplary embodiment of an exhaust manifold and engine;
FIG. 7 is a fragmented schematic view of a fifth exemplary embodiment of an exhaust manifold and engine;
FIG. 8 is a fragmented schematic view of a sixth exemplary embodiment of an exhaust manifold and engine;
FIG. 9 is a fragmented schematic view of a seventh exemplary embodiment of an exhaust manifold and engine;
FIG. 10 is a fragmented schematic view of an eighth exemplary embodiment of an exhaust manifold and engine.

### DETAILED DESCRIPTION OF EXEMPLARY EMBODIMENTS

The following description of the exemplary embodiment(s) is merely exemplary in nature and is in no way intended to limit the invention, its application, or uses.

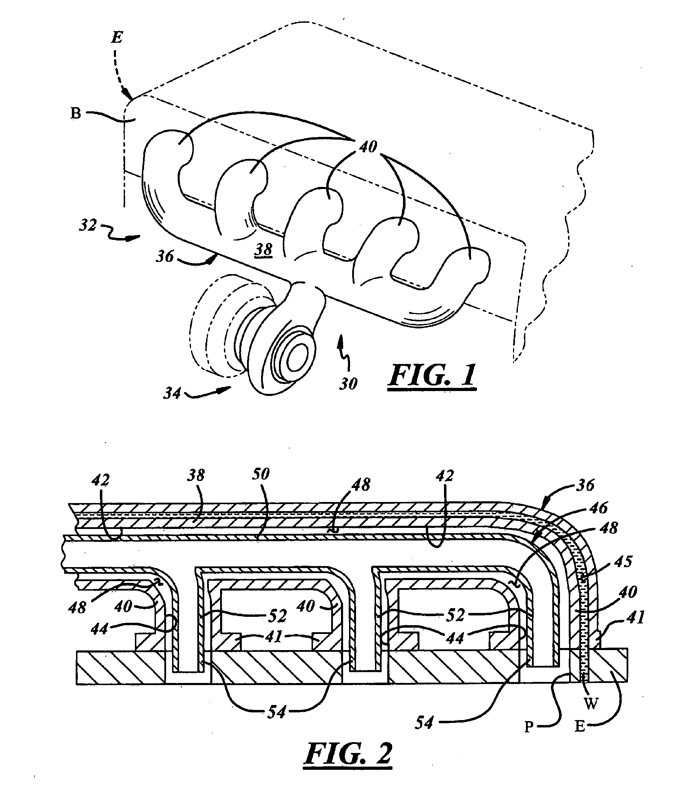

FIG. 1 illustrates a portion of an exemplary engine exhaust system 30, which may include an exhaust manifold 32 and a turbocharger turbine 34. The exhaust system 30 may be coupled in any suitable manner to an engine E. For example, the exhaust manifold 32 may be fastened to a cylinder head or block B of the engine so as to receive exhaust gas from combustion chambers (not shown) of the engine E and convey the exhaust gas further downstream of the engine E. Similarly, the turbine 34 may be coupled in any suitable manner to the manifold 32 so as to receive exhaust gas therefrom and convey the exhaust gas further downstream to other exhaust system devices. For example, the turbine 34 may be integrated with the manifold 32 or may be a separate device that is fastened or otherwise connected to the manifold 32.

Other engine exhaust system architectures may be used. For example, the exhaust manifold 32 may be integrated with a cylinder head (not separately shown) of the engine E. In another example, the turbine 34 may be integrated with the engine cylinder head or integrated head/manifold, or may be a separate device that is fastened or otherwise connected to the cylinder head or integrated head/manifold.

Several exemplary embodiments of an exhaust manifold are described below and are similar in many respects to one another. Accordingly, like numerals between the embodiments generally designate like or corresponding elements throughout the several views of the drawing figures. Additionally, the descriptions of the embodiments are incorporated by reference into one another and the common subject matter may generally not be repeated. Moreover, the embodiments may include any suitable gaskets, seals, fasteners, or any other components known to those of ordinary skill in the art and not shown here.

The exhaust manifold 32 includes a housing 36 having a collector 38 and one or more individual pipes 40 in fluid communication between the collector 38 and the block B. The pipes 40 may be separated as shown, or may be integrated at their block ends with one or more common flanges (not shown). The exhaust manifold 32 may be of any suitable shape, and size, and may include any suitable quantity of pipes 40, depending on the particular application involved. Also, the manifold housing 36 may be composed of any suitable material, for example, a non-ferrous material. The manifold housing 36 may be cast from molten material, for example, by die casting, investment casting, lost foam casting, or sand casting, or by any other suitable process. In a specific example, the manifold housing 36 is composed of die cast aluminum, magnesium, or the like. The housing 36 may be at least partially machined or milled. An exemplary material may include those used to produce compressor housings, for example, 356.0 aluminum alloy.

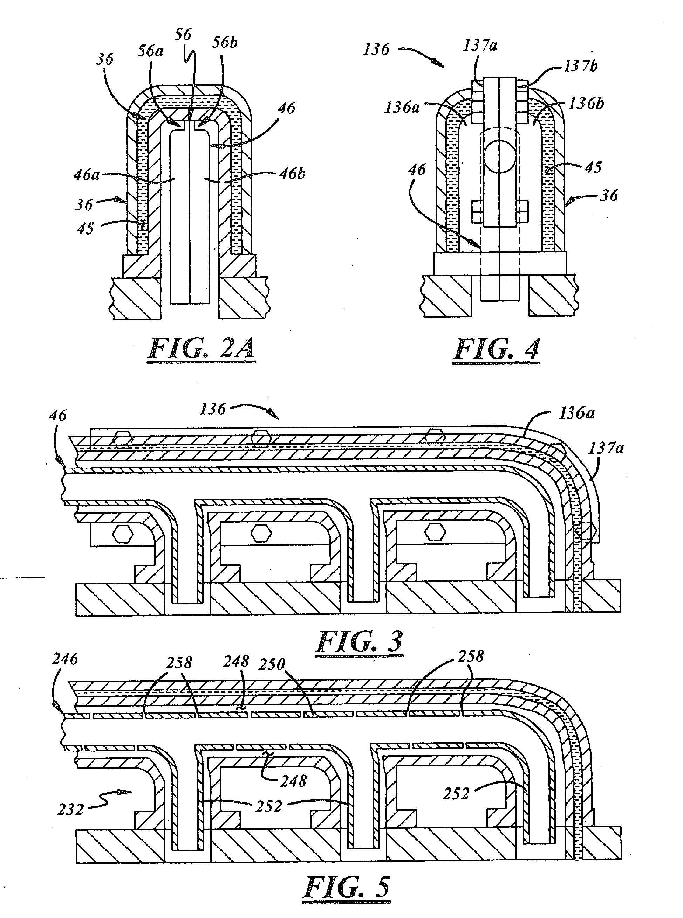

Referring now to FIG. 2, the exhaust manifold housing 36 define one or more paths for exhaust gas. For example, the collector 38 may define a common passage 42, and the pipes 40 may define individual pipe passages 44. Upstream ends of the pipes 40 represent one or more inlets of the housing 36, and a downstream end (shown fragmented) of the collector 38 represents an outlet of the housing 36.

The exhaust manifold 32 includes one or more insulators 46 carried in the exhaust passages of the housing 36 to convey exhaust gas therethrough and limit heat transfer from the exhaust gas to the housing 36. The insulator 46 defines one or more insulating voids 48 between the insulator 46 and the housing 36 to further limit heat transfer from the exhaust gas to the housing 36 and minimize or eliminate direct contact of exhaust gas with the housing 36. The insulator 46 may include a collector portion 50 and individual pipes 52 extending from the collector portion 50. The pipes 52 terminate in extensions 54 that extend beyond or outside of flanges 41 of the housing 36 and into ports P of the engine E. As shown, the insulator 46 may extend from the inlet(s) of the housing 36 to the outlet of the housing 36. Of course, the insulator 46 may or may not extend 100% of the way from the inlet(s) to the outlet of the housing 36 but may extend substantially the entire way, for example, from about 90-100%, or at least 50%.

The housing 36 also includes one or more liquid cooling passages 45 that may be supplied with coolant from the engine E, for example, via a coolant passage W. The coolant passage W may be in communication with a water jacket in the engine manifold or block, or with a hose or any other suitable conduit and/or source of coolant.

As shown in FIGS. 2, 3, and 5 radial space may be provided between the insulator extensions 54 and the housing pipes 40 to define parallel exhaust paths - a relatively hotter path through the insulator 46 and a relatively cooler path between the insulator 46 and the housing 36.

Referring to FIG. 2A, the insulator 46 may be constructed in any suitable manner, for example, stamped from two or more individual components 46a, 46b, which may be attached at a seam 56. The seam 56 may include opposed flanges 56a, 56b, which may be welded, crimped, fastened, and/or the like. The insulator 46 may be composed of any suitable material that is suitable for use in conveying exhaust gases, for example, a ferrous material. In a more specific example, a high nickel content temperature-resistant stainless steel may be used, for example a 1.43.xx or 1.48.xx steel that may be less than 2 mm in wall thickness for good deep drawing characteristics and low weight. The insulator 46 may be composed of a relatively low tensile strength material such that the insulator 46 need only support its own weight, and does not have to seal so that the insulator 46 need not be manufactured with close tolerances.

In the exemplary embodiment of FIGS. 2 and 2A, the housing 36 is cast around the insulator 46 in any suitable manner. For example, the insulator 46 may be positioned in a die cavity (not shown), and then molten material of the housing 36 may be introduced into the mold cavity around the insulator 46 and cooled, to at least partially envelop the insulator 46 in the cast housing 36.

In contrast, in the exemplary embodiment of FIGS. 3 and 4, a housing 136 may include a plurality of portions coupled together. For example, the housing 136 may be of a clamshell configuration wherein one housing portion 136a is coupled to another housing portion 136b, for example, by fastening opposed flanges 137a, 137b to one another. In this embodiment, the insulator 46 may be placed in a first one of the housing portions 136a and then another of the housing portions 136b may be assembled over the insulator 46 and coupled to the first housing portion 136a in any suitable manner so as to capture the insulator 46 in the housing 136.

In the exemplary embodiment of FIG. 5, an exhaust manifold 232 may include an exhaust flow insulator 246 having one or more apertures 258 to communicate some exhaust gas from the interior of the insulator 246 to an insulating void 248 between the insulator 246 and the housing 236. The apertures 258 allow for heat expansion and gas exchange between the two aforementioned spaces. As shown, the apertures 258 may be provided in a collector portion 250 of the insulator 246. But the apertures 258 also or instead may be provided in pipes 252 of the insulator 246.

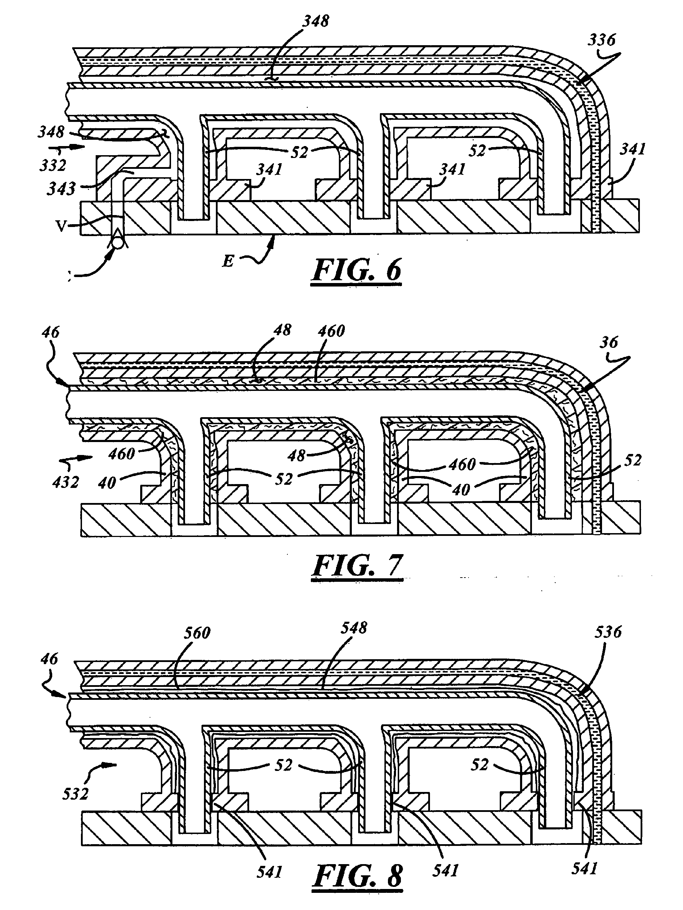

In the exemplary embodiment of FIG. 6, an exhaust manifold 332 includes a vacuum vented housing 336. The housing 336 includes flanges 341 that are coupled in close contact with outer peripheral surfaces of the insulator pipes 52. The close contact may provide a seal so as to prevent passage of exhaust gas between the pipes 52 and the flanges 341. One or more of the flanges 341 may be provided with a vacuum vent passage 343 in fluid communication at one end with an insulating void 348 of the manifold 332 and at another end with a vacuum vent passage V in the engine E. The engine vacuum vent passage V may be in fluid communication with any suitable source of engine vacuum, for example, an engine crankcase chamber (not shown) via a check valve C shown schematically. Accordingly, hot air or exhaust gas may be evacuated from or drawn through the insulating void 348 so as to cool the housing 336.

In the various exemplary embodiments of FIGS. 7 through 10, various examples of insulation materials are disposed in insulating voids between insulators and exhaust manifold housings.

In a first example, in the exemplary embodiment of FIG. 7, an exhaust manifold 432 includes a fiber insulation material 460 disposed in the insulating void 48 between the housing 36 and the insulator 46. The fiber insulation material 460 may be disposed in close, inclusive contact between the housing pipes 40 and the insulator pipes 52. The fiber insulation material 460 may be cast in place, assembled between housing portions, blown into the insulating void 48 in any suitable manner, or introduced to the void 48 in any other suitable manner. Any suitable insulation material may be used, for example, materials similar to that used in holding substrates in place in catalysts and particulate filters.

In a second example, in the exemplary embodiment of FIG. 8, an exhaust manifold 532 includes aluminum insulation 560 disposed in the insulating void 48 between a housing 536 and the insulator 46. The housing 536 includes flanges 541 that are coupled in close contact with outer peripheral surfaces of the insulator pipes 52 to provide a seal and prevent passage of exhaust gas between the pipes 52 and the flanges 541. The aluminum insulation 560 may be of multiple piece clamshell configuration, or may be a corrugated foil, or a wrap, or the like. The aluminum insulation 560 may be cast in place, assembled between housing portions, or introduced to the void in any other suitable manner.

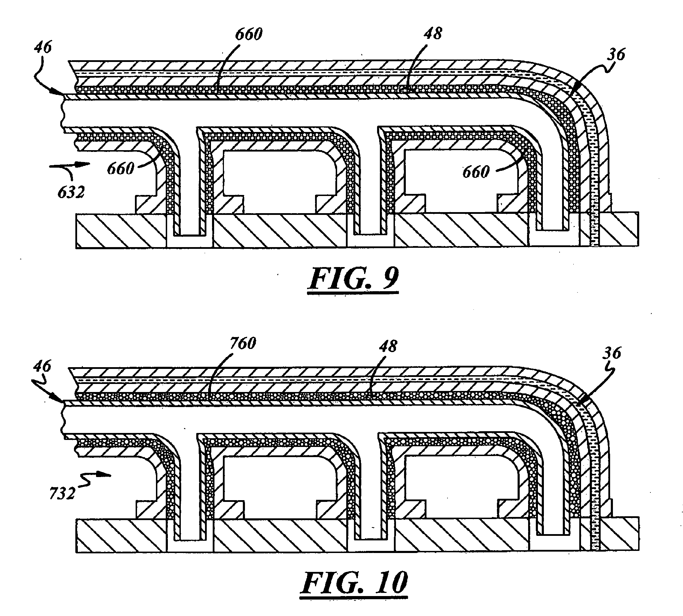

In a third example, in the exemplary embodiment of FIG. 9, an exhaust manifold 632 includes ceramic ball insulation 660 disposed in the insulating void 48 between the insulator 46 and the housing 36. The ceramic ball insulation 660 may be poured into the void 48 after assembly or production of the housing 36 and the insulator 46, or may be introduced to the void 48 in any other suitable manner.

In a fourth example, in the exemplary embodiment of FIG. 10, an exhaust manifold 732 includes aerogel insulation 760 disposed in the insulating void 48 between the insulator 46 and the housing 36. The aerogel insulation 760 may be poured into the void 48 after assembly or production of the housing 36 and the insulator 46, or may be introduced to the void 48 in any other suitable manner.

In the various embodiments, the insulators may be disposed adjacent to the housings over substantial portions of the internal surface areas of the housings that would be otherwise exposed to exhaust gas. However, 100% coverage of the insulators to the housings in the areas of the exhaust gas passages may not be necessary or even feasible due to cost constraints. Instead, the insulators may be selectively applied to those locations where shielding or insulating is desired and cost effective. However, greater than 50% of the surface areas may be covered to reduce the amount of heat transfer from the exhaust gas to the housings to a degree sufficient to prevent damage to the housings or unacceptable performance of the respective device, and/or to reduce quantity and/or volume of liquid cooling passages in the housings. For example, it is anticipated that such a configuration may result in a 1/3 to 2/3 volumetric reduction in liquid cooling of an exhaust system device housing. Similarly, the insulation material may be disposed between the housings and the insulators over substantial portions thereof. But 100% coverage of the insulation material over the portions of the housings and insulators that correspond to the exhaust gas passages may not be necessary or even feasible due to cost constraints. Instead, the insulation material may be selectively applied to those locations where shielding or insulating is desired and cost effective.

Likewise, the cooling passages may be disposed in the housings over substantial portions thereof. But 100% coverage of the cooling passages over the portions of the housings and insulators that correspond to the exhaust gas passages may not be necessary or even feasible due to cost constraints. Instead, the cooling passages may be selectively applied to those locations where cooling is desired and cost effective. For example, in areas with otherwise good thermal insulation, liquid cooling passages may be avoided or eliminated in favor of convective air cooling.

Another exemplary embodiment includes an exhaust system device that comprises a liquid-cooled non-ferrous housing including an inlet, an outlet, a path for exhaust gas between the inlet and the outlet, and a liquid cooling passage adjacent the exhaust gas path, and that also may comprise a ferrous exhaust flow insulator carried in the exhaust gas path of the housing substantially from the inlet and substantially to the outlet and for conveying exhaust gas through the housing to limit heat transfer from exhaust gas to the housing.

The housing include an exhaust manifold housing.

At least a portion of the insulator may be applied in direct contact with the housing.

At least a portion of the insulator may be a coating.

The coating may be ceramic.

The insulator may be comprised of multiple portions.

The multiple portions may include flanges coupled to one another along a seam.

The housing may be cast from aluminum and the insulator may be manufactured from steel.

The housing may be cast around the insulator.

The housing may be comprised of multiple portions coupled together.

The housing may be of a clamshell configuration having one housing portion coupled to another housing portion.

An insulating void is between the insulator and the housing.

The insulator may include apertures to communicate exhaust gas from the interior of the insulator to the insulating void between the insulator and the housing.

The insulating void may be vacuum vented by a vacuum vent passage in the housing in fluid communication at one end with the insulating void and communicable at another end with a vacuum vent passage in an engine.

Insulation material may be disposed in the insulating void between the insulator and the housing.

The insulation material may be at least one of cast in place, poured into the insulating void, assembled between portions of the housing, or blown into the insulating void.

The insulation material may include fiber insulation.

The insulation material may include aluminum insulation.

The insulation material may include ceramic ball insulation ball insulation.

The insulation material may include aerogel insulation.

A further exemplary embodiment includes an exhaust manifold that comprises a liquid-cooled non-ferrous housing including an inlet, an outlet, a path for exhaust gas between the inlet and the outlet, and a liquid cooling passage adjacent the exhaust gas path, and that also may comprise a ferrous exhaust flow insulator carried in the exhaust gas path of the housing substantially from the inlet and substantially to the outlet and for conveying exhaust gas through the housing to limit heat transfer from exhaust gas to the housing, and that further may comprise an insulation material disposed between the housing and the insulator.

Yet another exemplary embodiment includes an exhaust system device that comprises a liquid-cooled non-ferrous housing including an inlet, an outlet, a path for exhaust gas between the inlet and the outlet, and a liquid cooling passage adjacent the exhaust gas path, and that also may comprise an exhaust flow insulator coated to the housing along the exhaust gas path of the housing substantially from the inlet and substantially to the outlet and for conveying exhaust gas through the housing to limit heat transfer from exhaust gas to the housing.

The above description of embodiments is merely exemplary in nature and, thus, variations thereof are not to be regarded as a departure from the scope of the invention.

## Claims

1. An exhaust system device (30) comprising:
a liquid-cooled non-ferrous housing (36) including an inlet, an outlet, a path for exhaust gas between the inlet and the outlet, and a liquid cooling passage (45) adjacent the exhaust gas path;
**characterized in** an exhaust flow insulator (46) carried in the exhaust gas path of the housing (36) to convey exhaust gas through the housing (36) to limit heat transfer from exhaust gas to the housing (36), wherein said insulator (46) is composed of at least one of a ferrous material or a ceramic material and
**characterized in** further comprising an insulating void (48) between the insulator (46) and the housing (36), wherein the housing (36) includes at least one of an exhaust manifold housing (36), and the insulator (46) is carried in the exhaust gas path of the housing (36) substantially from the inlet and substantially to the outlet, and wherein the housing (36) includes a flange and wherein the insulator (46) includes an extension portion extending beyond the flange.

2. An exhaust system device as set forth in claim 1, wherein at least a portion of the insulator (46) is in direct contact with the housing (36).

3. An exhaust system device as set forth in claim 2, wherein at least a portion of the insulator (46) is a ceramic coating.

4. An exhaust system device as set forth in claim 1 wherein the insulator (46) is comprised of multiple portions.

5. An exhaust system device as set forth in claim 4 wherein the multiple portions include flanges (56a, b) coupled to one another along a seam (56).

6. An exhaust system device as set forth in claim 1 wherein the housing (36) is cast from aluminum and the insulator (46) is manufactured from steel.

7. An exhaust system device as set forth in claim 1 wherein the housing (36) is cast around the insulator (46).

8. An exhaust system device as set forth in claim 1 wherein the housing (136) is comprised of multiple portions (136a, b)coupled together.

9. An exhaust system device as set forth in claim 8 wherein the housing (136) is of a clamshell configuration having one housing portion (136a) coupled to another housing portion (136b).

10. An exhaust system device as set forth in claim 1 wherein the insulator (46) includes apertures to communicate exhaust gas from the interior of the insulator (46) to the insulating void (48) between the insulator (46) and the housing (36).

11. An exhaust system device as set forth in claim 1 wherein the insulating void (48) is vacuum vented by a vacuum vent passage in the housing (36) in fluid communication at one end with the insulating void (48) and communicable at another end with a vacuum vent passage in an engine (E).

12. An exhaust system device as set forth in claim 1, further comprising an insulation material disposed in the insulating void (48) between the insulator (46) and the housing (36).

13. An exhaust system device as set forth in claim 12, wherein the insulation material is at least one of cast in place, poured into the insulating void (48), assembled between portions of the housing (36), or blown into the insulating void (48), and includes at least one of fiber insulation, aluminum insulation, ceramic ball insulation, or aerogel insulation.

## Patentansprüche

1. Abgassystemvorrichtung (30), umfassend:
ein flüssigkeitsgekühltes Nichteisengehäuse (36), das einen Einlass, einen Auslass, einen Pfad für Abgas zwischen dem Einlass und dem Auslass und einen Flüssigkeitskühlungskanal (45) benachbart zu dem Abgaspfad aufweist;
**gekennzeichnet durch** einen Abgasströmungsisolator (46), der in dem Abgaspfad des Gehäuses (36) zum Befördern von Abgas **durch** das Gehäuse (36) getragen wird, um die Wärmeübertragung vom Abgas zum Gehäuse (36) zu begrenzen, wobei der Isolator (46) aus mindestens einem von Eisenmaterial oder einem keramischen Material besteht und
**gekennzeichnet dadurch, dass** er ferner einen isolierenden Hohlraum (48) zwischen dem Isolator (46) und dem Gehäuse (36) umfasst, wobei das Gehäuse (36) mindestens eines von einem Abgaskrümmer-Gehäuse (36) aufweist und der Isolator (46) im Abgaspfad des Gehäuses (36) im Wesentlichen von dem Einlass und im Wesentlichen zum Auslass getragen wird, und wobei das Gehäuse (36) einen Flansch aufweist und wobei der Isolator (46) einen Verlängerungsabschnitt aufweist, der sich über den Flansch hinaus erstreckt.

2. Abgassystemvorrichtung nach Anspruch 1, wobei mindestens ein Abschnitt des Isolators (46) in direktem Kontakt mit dem Gehäuse (36) steht.

3. Abgassystemvorrichtung nach Anspruch 2, wobei mindestens ein Abschnitt des Isolators (46) eine keramische Beschichtung ist.

4. Abgassystemvorrichtung nach Anspruch 1, wobei der Isolator (46) aus mehreren Abschnitten besteht.

5. Abgassystemvorrichtung nach Anspruch 4, wobei die mehreren Abschnitte Flansche (56a, b) aufweisen, die entlang einer Naht (56) aneinander gekoppelt sind.

6. Abgassystemvorrichtung nach Anspruch 1, wobei das Gehäuse (36) aus Aluminium gegossen ist und der Isolator (46) aus Stahl gefertigt ist.

7. Abgassystemvorrichtung nach Anspruch 1, wobei das Gehäuse (36) um den Isolator (46) gegossen ist.

8. Abgassystemvorrichtung nach Anspruch 1, wobei das Gehäuse (136) aus mehreren aneinander gekoppelten Abschnitten (136a, b) besteht.

9. Abgassystemvorrichtung nach Anspruch 8, wobei das Gehäuse (136) eine Greiferkonfiguration ist, die einen Gehäuseabschnitt (136a) aufweist, der mit einem anderen Gehäuseabschnitt (136b) gekoppelt ist.

10. Abgassystemvorrichtung nach Anspruch 1, wobei der Isolator (46) Öffnungen aufweist, damit Abgas aus dem Inneren des Isolators (46) mit dem isolierenden Hohlraum (48) zwischen dem Isolator (46) und dem Gehäuse (36) kommunizieren kann.

11. Abgassystemvorrichtung nach Anspruch 1, wobei der isolierende Hohlraum (48) von einem Vakuumentlüftungskanal im Gehäuse (36), das an einem Ende mit dem isolierenden Hohlraum (48) in Fluidverbindung steht, entlüftet wird und an einem anderen Ende mit einem Vakuumentlüftungskanal in einem Motor (E) kommunizieren kann.

12. Abgassystemvorrichtung nach Anspruch 1, ferner umfassend ein Isoliermaterial, das in dem isolierenden Hohlraum (48) zwischen dem Isolator (46) und dem Gehäuse (36) angeordnet ist.

13. Abgassystemvorrichtung nach Anspruch 12, wobei das Isoliermaterial mindestens entweder vor Ort in den isolierenden Hohlraum (48) gegossen wird, der zwischen Abschnitten des Gehäuses (36) angeordnet ist, oder in den isolierenden Hohlraum (48) geblasen wird und mindestens eines von Faserisolierung, Aluminiumisolierung und Keramikkugelisolierung oder Aerogelisolierung einschließt.

## Revendications

1. Dispositif (30) pour un système d'échappement, comprenant :
un boîtier non-ferreux refroidi par un liquide (36) comprenant une entrée, une sortie, un chemin pour les gaz d'échappement entre l'entrée et la sortie, et un passage de refroidissement par liquide (45) adjacent au chemin de gaz d'échappement ;
**caractérisé par** un isolateur d'écoulement d'échappement (46) supporté dans le chemin de gaz d'échappement du boîtier (36) de manière à transporter les gaz d'échappement à travers le boîtier (36) pour limiter le transfert thermique des gaz d'échappement au boîtier (36), ledit isolateur (46) étant constitué d'au moins un parmi un matériau ferreux ou un matériau céramique et
**caractérisé en outre en ce qu'**il comprend un vide d'isolation (48) entre l'isolateur (46) et le boîtier (36), le boîtier (36) comportant au moins un boîtier de collecteur d'échappement (36), et l'isolateur (46) étant supporté dans le chemin de gaz d'échappement du boîtier (36) substantiellement depuis l'entrée et substantiellement jusqu'à la sortie, et le boîtier (36) comportant une bride et l'isolateur (46) comportant une portion d'extension s'étendant au-delà de la bride.

2. Dispositif pour un système d'échappement selon la revendication 1, dans lequel au moins une portion de l'isolateur (46) est en contact direct avec le boîtier (36).

3. Dispositif pour un système d'échappement selon la revendication 2, dans lequel au moins une portion de l'isolateur (46) est un revêtement céramique.

4. Dispositif pour un système d'échappement selon la revendication 1, dans lequel l'isolateur (46) est constitué de plusieurs portions.

5. Dispositif pour un système d'échappement selon la revendication 4, dans lequel les plusieurs portions incluent des brides (56a, b) accouplées les unes aux autres le long d'un joint (56).

6. Dispositif pour un système d'échappement selon la revendication 1, dans lequel le boîtier (36) est moulé en aluminium et l'isolateur (46) est fabriqué en acier.

7. Dispositif pour un système d'échappement selon la revendication 1, dans lequel le boîtier (36) est moulé autour de l'isolateur (46).

8. Dispositif pour un système d'échappement selon la revendication 1, dans lequel le boîtier (136) est constitué de plusieurs portions (136a, b) accouplées les unes aux autres.

9. Dispositif pour un système d'échappement selon la revendication 8, dans lequel le boîtier (136) est configuré en forme de coquillage ayant une portion de boîtier (136a) accouplée à une autre portion de boîtier (136b).

10. Dispositif pour un système d'échappement selon la revendication 1, dans lequel l'isolateur (46) comporte des ouvertures pour faire communiquer les gaz d'échappement de l'intérieur de l'isolateur (46) avec le vide d'isolation (48) entre l'isolateur (46) et le boîtier (36).

11. Dispositif pour un système d'échappement selon la revendication 1, dans lequel le vide d'isolation (48) est un vide ventilé par un passage de ventilation de vide dans le boîtier (36) en communication fluidique à une extrémité avec le vide d'isolation (48) et pouvant communiquer à une autre extrémité avec un passage de ventilation de vide dans un moteur (E).

12. Dispositif pour un système d'échappement selon la revendication 1, comprenant en outre un matériau d'isolation disposé dans le vide d'isolation (48) entre l'isolateur (46) et le boîtier (36).

13. Dispositif pour un système d'échappement selon la revendication 12, dans lequel le matériau d'isolation est au moins l'un parmi un matériau coulé sur place, versé dans le vide d'isolation (48), assemblé entre des portions du boîtier (36), ou soufflé dans le vide d'isolation (48), et comporte au moins une isolation à base de fibres, une isolation à base d'aluminium, une isolation à base de billes céramiques, ou une isolation à base d'aérogel.
